# EUROPÄISCHE PATENTSCHRIFT

(11) **EP 2 435 156 B1**
(45) Veröffentlichungstag und Bekanntmachung des Hinweises auf die Patenterteilung: **27.03.2013**
(21) Anmeldenummer: 10732633.2
(22) Anmeldetag: 20.05.2010
(51) Int. Cl.: B01D 29/60, B01D 35/143, C02F 1/00, E03B 7/07

(54) **VERFAHREN ZUM BETRIEB EINES RÜCKSPÜLBAREN FILTERS**
METHOD FOR OPERATING A BACKFLUSHING FILTER
PROCÉDÉ PERMETTANT D'UTILISER UN FILTRE LAVABLE À CONTRE-COURANT

(30) Priorität: 26.05.2009 DE 102009026487
(43) Veröffentlichungstag der Anmeldung: 04.04.2012
(73) Patentinhaber: Judo Wasseraufbereitung GmbH, 71364 Winnenden (DE)
(72) Erfinder: SÖCKNICK, Ralf, 70806 Kornwestheim (DE)
(74) Vertreter: Kohler Schmid Möbus
(86) Internationale Anmeldenummer: PCT/DE2010/050027
(87) Internationale Veröffentlichungsnummer: WO 2010/136027

(56) Entgegenhaltungen:
- EP-A1- 0 723 797
- DE-A1- 3 714 660
- US-A- 4 578 186

## Beschreibung

Die Erfindung betrifft ein Verfahren zum Betrieb eines rückspülbaren Filters, insbesondere eines Filters für eine Hauswasseranlage, wobei eine Rückspülung des Filters jeweils manuell durchgeführt wird, wobei zur manuellen Durchführung der Rückspülung ein Hebel, ein Handrad oder eine andere Bedienungsmechanik durch den Anwender von Hand bewegt wird, wobei durch diese Bewegung der Filter händisch mechanisch verstellt wird, wobei durch diese Verstellung ein oder mehrere Ventile zum Einstellen der für die Rückspülung erforderlichen Flüssigkeitsströme geöffnet oder geschlossen werden, und wobei mittels einer Zeitmessvorrichtung der Ablauf eines definierten Zeitintervalls bestimmt wird und bei Ablauf des Zeitintervalls an die Durchführung der nächsten Rückspülung erinnert wird.

Ein derartiges Verfahren ist beispielsweise bekannt geworden durch das Firmenprospekt der Judo Wasseraufbereitung GmbH, Winnenden, DE "Die Keimschutzklasse stoppt schädliche Eindringlinge" vom März 2006.

Filter verhindern den Eintrag von Partikeln in die Hausinstallation. Ohne Schutzfilter können sich in einer Hauswasseranlage elektrochemische Elemente bilden und ablagern, die einen ordnungsgemäßen Betrieb beeinträchtigen. Insbesondere kann es zu Störungen an Armaturen und technischen Geräten kommen.

Um eine einwandfreie Filterfunktion zu gewährleisten, müssen die Filter in regelmäßigen Abständen gereinigt werden. Bei handelsüblichen Filtern erfolgt die Reinigung in der Regel durch Rückspülen.

Nach erfolgter Rückspülung des Filters steht im Wesentlichen wieder die vollständige Filterleistung zur Verfügung. Rückspülbare Filter sind gemäß DIN 1988 spätestens alle zwei Monate rückzuspülen.

Der Anwender weiß jedoch oft nicht genau, wann die letzte Rückspülung stattgefunden hat. Dies kann unter anderem daran liegen, dass die Rückspülung in unregelmäßigen Abständen durchgeführt wird, etwa wenn der Anwender sich zufälligerweise im Keller in der Nähe des Filters aufhält. Häufig wird auch nur vergessen, das Datum der nächsten Rückspülung zu dokumentieren.

Zur Erinnerung an den nächsten Rückspülvorgang wird bei den im oben genannten Firmenprospekt aufgeführten Rückspülfiltern "PROFi-PLUS" und "PROmi" der nächste Rückspültermin mittels eines von Hand versetzbaren Stellringes markiert, der unterhalb eines Handrades zur manuellen, mechanischen Durchführung einer Rückspülung angeordnet ist. Ein ähnliches Vorgehen wird auch in der Druckschrift EP 0 723 797 A1 beschrieben, die als nächstliegender Stand der Technik angesehen wird.

Zusätzlich kann durch eine Memoelektronik an den nächsten Rückspültermin erinnert werden. Durch Drücken einer RESET-Taste der Memoelektronik wird ein Zeitintervall von zwei Monaten neu gestartet.

Nachteilig ist, dass sowohl der Stellring am Handrad als auch die RESET-Taste der Memoelektronik jeweils bei jeder Rückspülung betätigt werden müssen, damit zuverlässig an den nächsten, normgemäßen Rückspültermin erinnert werden kann. Diese Betätigung kann jedoch leicht vergessen werden, so dass dann der Hinweis auf den nächsten Rückspültermin nicht mehr aktuell ist.

Der im Firmenprospekt beschriebene Rückspülfilter "PROFiMAT-PLUS" führt den Rückspülvorgang mit Hilfe einer elektronischen Steuerung und eines elektrischen Motors in regelmäßigen Abständen selbsttätig durch. Dies garantiert eine zuverlässige und rechtzeitige Durchführung des Rückspülvorgangs. Einen Filter mit Rückspülautomatik beschreibt auch die DE 37 14 660 A1, wobei ein Stellmotor für die Durchführung einer Rückspülung zusätzlich über eine Drucktaste angesteuert werden kann. Derartige Filter mit Rückspülautomatik sind jedoch vergleichsweise teuer.

### Aufgabe der Erfindung

Es ist die Aufgabe der vorliegenden Erfindung, kostengünstig mit einer größeren Zuverlässigkeit regelmäßige Rückspülungen eines Filters, insbesondere eines Wasserfilters, durchführen zu können.

### Kurze Beschreibung der Erfindung

Diese Aufgabe wird gelöst durch ein Verfahren der eingangs genannten Art, das dadurch gekennzeichnet ist, dass mittels der manuellen Durchführung einer Rückspülung der Beginn eines neuen Zeitintervalls in der Zeitmessvorrichtung geschaltet wird.

Erfindungsgemäß wird bei einer manuellen Betätigung der Rückspülfunktion des Filters zwingend der Beginn eines neuen Zeitintervalls unmittelbar ausgelöst. Über die Zeitmessvorrichtung wird dann der Zeitpunkt der nächsten Rückspülung (Ablauf des soeben begonnenen Zeitintervalls) in direkter Weise bestimmt, und der Anwender kann auf das Nahen oder Erreichen dieses Zeitpunkts zuverlässig hingewiesen werden.

Der Zeitpunkt der nächsten Rückspülung muss somit nicht indirekt bzw. separat (z.B. Eintrag in einen Kalender, Bewegung eines Stellringes am Filter, Zurückstellen einer Stoppuhr...) registriert werden. Dem Anwender liegt mit dem erfindungsgemäßen Verfahren zuverlässig die Information vor, wann die nächste Rückspülung spätestens erfolgen sollte.

Die Erfindung kommt insbesondere ohne eine kostspielige Rückspülautomatik aus. Die zur Realisierung der Erfindung typischerweise eingesetzten Bauteile (Zeitmessvorrichtung, eine zusätzliche Schalteinrichtung sowie ein Signalgeber und/oder eine Zeitanzeige) sind kostengünstig erhältlich und leicht in handelsübliche Rückspülfilter zu integrieren.

Im Rahmen der Erfindung wird der Rückspülvorgang manuell aktiviert (manuell durchgeführt). Dazu wird ein Hebel, ein Handrad oder eine andere Bedienungsmechanik durch den Anwender von Hand bewegt. Diese Bewegung wird genutzt, um den Filter mechanisch so zu verstellen, dass die Rückspülung erfolgt. Dabei werden durch diese Verstellung ein oder mehrere Ventile geöffnet oder geschlossen, so dass sich die für die Reinigung des Filters erforderlichen Flüssigkeitsströme einstellen. In der Regel wird der gesamte Reinigungsvorgang vom Anwender über den Hebel, das Handrad oder die andere Bedienungsmechanik manuell kontrolliert.

Im Rahmen der Rückspülung wird der Filter, insbesondere ein Siebfiltereinsatz, typischerweise durch Abspülen mit bereits filtriertern Wasser gereinigt. Zusätzlich kann der Filter gleichzeitig mit einer oder mehreren Absaugvorrichtungen abgefahren werden. Die Bewegung der Absaugvorrichtung ist dabei bevorzugt an die Bewegung des Hebels, des Handrades oder der anderen Bedienmechanik gekoppelt. Bevorzugt erfolgt die Rückspülung und Reinigung nach dem "Punkt-Rotations-Prinzip", bei dem der Filter im Reinigungsvorgang Punkt für Punkt durch Rückspülung bei gleichzeitiger Absaugung mit filtriertem Wasser gereinigt wird; dabei wird die Wasserversorgung nicht unterbrochen.

Erfindungsgemäß wird die Bewegung, die der Durchführung (Aktivierung) der Rückspülung dient, also auch beispielsweise der Punkt-für-Punkt-Reinigung des Filters, zur gleichzeitigen Auslösung eines Schaltvorgangs genutzt, der in der Zeitmessvorrichtung den Beginn eines neuen Zeitintervalls bzw. den entsprechenden Messvorgang hervorruft. Ein neues Zeitintervall wird bei jeder Durchführung einer Rückspülung geschaltet (gestartet), unabhängig davon, ob das letzte Zeitintervall bereits abgelaufen ist oder auch nicht. Insbesondere wird ein neues Zeitintervall auch dann begonnen, wenn das alte bzw. vorhergehende Zeitintervall bei der Durchführung der Rückspülung noch nicht vollständig abgelaufen ist; ebenso wird bei der Durchführung der Rückspülung ein neues Zeitintervall begonnen, wenn das alte bzw. vorhergehende Zeitintervall bereits seit einiger Zeit abgelaufen und eine Rückspülung überfällig gewesen ist. Der Schaltvorgang kann beispielsweise mechanisch, aber auch elektrisch, elektromechanisch bzw. elektronisch ausgelöst werden.

### Bevorzugte Varianten der Erfindung

Bevorzugt ist eine Variante des erfindungsgemäßen Betriebsverfahrens, bei der die Rückspülung die Durchführung einer Relativbewegung zwischen einem Siebfiltereinsatz und einer Absaugvorrichtung umfasst. Die Relativbewegung kann dann in vorteilhafter Weise zur Schaltung des Beginns eines Zeitintervalls genutzt werden. Durch die Relativbewegung wird die Absaugvorrichtung entlang der Oberfläche des Siebfiltereinsatzes bewegt. Gleichzeitig wird ein Spülventil geöffnet, durch das die angesammelten Verunreinigungen ausgespült werden.

Eine vorteilhafte Weiterbildung dieser Verfahrensvariante sieht vor, dass durch die Relativbewegung ein mechanischer Schalter, insbesondere ein Taster, betätigt wird. Somit wird der Beginn eines neuen Zeitintervalls in einfacher Weise in der Zeitmessvorrichtung geschaltet. In der Regel wird dabei der Taster von einer Nocke überfahren, wobei typischerweise der Taster an einem ortsfesten Bauteil des Filters und die Nocke an einem beweglichen Bauteil des Filters ausgebildet ist. Durch die Relativbewegung kann alternativ auch ein elektrischer oder elektromechanischer Schalter ausgelöst werden. Zum Beispiel können für den Schaltvorgang auch sogenannte "Reed-Kontakte" genutzt werden.

Eine andere vorteilhafte Weiterbildung dieser Verfahrensvariante ist dadurch gekennzeichnet, dass durch die Relativbewegung ein Hallimpuls erzeugt wird, der den Beginn eines neuen Zeitintervalls schaltet. Die zur Erzeugung eines Hallimpulses erforderlichen Elemente (z.B. Permanentmagnete, die an einer Hallsonde vorbeigeführt werden oder umgekehrt) können berührungslos arbeiten, wodurch Reibung und Verschleiß minimiert werden können.

Eine vorteilhafte Weiterbildung dieser Verfahrensvarianten sieht vor, dass die Relativbewegung durch die manuelle Drehung eines Handrades erfolgt. Dann kann in vorteilhafter Weise auf weitere Werkzeuge oder Bedienhilfen wie z.B. Werkzeugschlüssel oder dergleichen verzichtet werden. Handräder sind typischerweise ergonomisch geformt, und der Anwender kann auf einfache Weise unmittelbar per Hand eine Rückspülung des Filters vornehmen und gleichzeitig den Beginn eines neuen Zeitintervalls starten. Der Krafteintrag in das Handrad bei dessen manueller Drehung erzeugt die Relativbewegung von Siebfiltereinsatz und Absaugvorrichtung. Ein Handrad kann allerdings auch bei Filtertypen ohne sich zueinander relativ bewegender Absaugvorrichtungen und Siebfiltereinsätze zum Einsatz kommen, um die manuelle Aktivierung (Durchführung) der Rückspülung zu betätigen.

Bevorzugt ist weiterhin eine Variante des erfindungsgemäßen Betriebsverfahrens, bei der die Zeitmessvorrichtung den Ablauf des Zeitintervalls bestimmt, indem die Zeitmessvorrichtung die noch bis zum Ablauf eines Zeitintervalls verbleibende Zeit zurückzählt. Somit ist die Restlaufzeit, die bis zur nächsten Rückspülung noch zur Verfügung steht, direkt verfügbar. Eine möglicherweise erforderliche Umrechnung in eine Restbetriebszeit ist dann nicht notwendig.

Bevorzugt ist weiterhin eine Variante des erfindungsgemäßen Betriebsverfahrens, die vorsieht, dass die Zeitmessvorrichtung den Ablauf des Zeitintervalls bestimmt, indem die Zeitmessvorrichtung die vom Beginn eines Zeitintervalls an verstrichene Zeit hochzählt. Diese Verfahrensvariante ist sehr einfach, da sie lediglich die seit der letzten Rückspülung verstrichene Zeit zu registrieren braucht.

Weiterhin bevorzugt ist eine Verfahrensvariante, die dadurch gekennzeichnet ist, dass bei Ablauf eines Zeitintervalls ein Signal abgegeben wird. Mit dem Signal wird an die nächste, fällige Rückspülung erinnert bzw. auf diese hingewiesen. Bevorzugt kann das Signal auch entfernt vom Filter (etwa in einem anderen Raum) erhalten oder wahrgenommen werden, sodass der Anwender noch stärker während des Betriebs des Filters entlastet wird. Besonders komfortabel ist als Signal beispielsweise der Versand einer Kurzmitteilung auf ein Handy des Anwenders oder in größeren Gebäuden ein elektrisches Signal an eine Leitwarte (z.B. an den Hausmeisterdienst). Falls dieses Signal dauerhaft abgegeben wird, wird es bei einer Aktivierung (Durchführung) der Rückspülung bzw. beim manuellen Betätigen der Rückspülung wieder abgeschaltet.

Ebenfalls bevorzugt ist eine Verfahrensvariante, die vorsieht, dass ein zusätzliches Signal (Vorwarnsignal) abgegeben wird, wenn die noch bis zum Ablauf eines Zeitintervalls verbleibende Zeit eine einstellbare Vorwarnzeit unterschreitet. Durch das Vorwarnsignal kann der Anwender die Rückspülung besser planen und wird so weiter entlastet. Die Vorwarnzeit ist kürzer als ein Zeitintervall zwischen zwei Rückspülungen. In der Regel beträgt die Vorwarnzeit bei einem Zeitintervall von zwei Monaten (DIN 1988) ca. eine Woche. Es ist auch möglich, mehrere unterschiedlich lange Vorwarnzeiten einzustellen (erste Vorwarnzeit: eine Woche, zweite Vorwarnzeit: ein Tag), die bei einer Unterschreitung jeweils unterschiedliche Signale abgeben. Die Vorwarnzeiten können z.B. über ein Potentiometer eingestellt werden. Bei einer Aktivierung (Durchführung) der Rückspülung werden alle Signale, falls sie vorher dauerhaft abgegeben wurden, abgeschaltet.

Eine andere bevorzugte Verfahrensvariante sieht vor, dass ein zusätzliches Signal (Hinweissignal) abgegeben wird, wenn die vom Beginn eines Zeitintervalls an verstrichene Zeit eine einstellbare Hinweiszeit erreicht hat. Auch hier wird der Anwender zusätzlich entlastet und frühzeitig auf eine anstehende Rückspülung hingewiesen. Die Hinweiszeit ist ebenfalls kürzer als ein Zeitintervall zwischen zwei Rückspülungen. In der Regel beträgt die Hinweiszeit bei einem Zeitintervall von zwei Monaten ca. sieben Wochen. Es ist auch möglich, mehrere unterschiedlich lange Hinweiszeiten einzustellen, die bei einem jeweiligen Erreichen unterschiedliche Signale abgeben. Bei einer Aktivierung (Durchführung) der Rückspülung werden alle Signale, falls sie vorher dauerhaft abgegeben wurden, abgeschaltet.

Bei einer bevorzugten Verfahrensvariante sind das oder die abgegebenen Signale optische und/oder akustische und/oder elektrische Signale und/oder Funksignale. Optische und/oder akustische Signale können je nach Intensität sehr einfach vom Anwender des Filters unmittelbar wahrgenommen werden. Insbesondere ein blinkendes Lichtsignal kann als leicht erkennbarer Hinweis genutzt werden. Funksignale können in vorteilhafter Weise genutzt werden, um die Information über die mittel- oder kurzfristig anstehende oder auch fällige Rückspülung bei geringem Aufwand an beliebige, auch weiter entfernte Orte, zu übermitteln. Dies kann z.B. in Form von Kurznachrichten erfolgen, die per Handy an den Anwender versandt werden.

Schließlich ist noch eine Verfahrensvariante bevorzugt, bei der der Filter über die seit Beginn eines Zeitintervalls verstrichene Zeit oder die noch bis zum Ablauf eines Zeitintervalls verbleibende Zeit mittels einer Anzeige informiert. Es ist so jederzeit der aktuelle Stand des Filters in bequemer Art und Weise ablesbar.

In den Rahmen der vorliegenden Erfindung fällt auch ein rückspülbarer Filter, insbesondere rückspülbarer Filter für eine Hauswasseranlage, zur Filterung eines flüssigen Mediums, wobei der Filter zur manuellen Durchführung einer den Filter reinigenden Rückspülung ausgebildet ist, umfassend
- einen Hebel, ein Handrad oder eine andere Bedienungsmechanik zur Bewegung durch einen Anwender von Hand,
- ein oder mehrere Ventile zum Einstellen der für die Rückspülung erforderlichen Flüssigkeitsströme, wobei durch eine Bewegung des Hebels, des Handrads oder der anderen Bedienungsmechanik der Filter händisch mechanisch verstellbar ist, wobei durch diese Verstellung das oder die Ventile geöffnet oder geschlossen werden,
- und eine Zeitmessvorrichtung zur Bestimmung des Ablaufs eines Zeitintervalls und zur Erinnerung an die Durchführung einer Rückspülung bei Ablauf des Zeitintervalls, der dadurch gekennzeichnet ist, dass der Filter eine Schalteinrichtung aufweist, die durch die manuelle Durchführung einer Rückspülung auslösbar ist, und dass die Schalteinrichtung an die Zeitmessvorrichtung gekoppelt ist, um den Beginn eines Zeitintervalls zu schalten.

Bei einer manuellen Betätigung der Rückspülfunktion eines derartigen erfindungsgemäßen Filters wird in vorteilhafter Weise der Beginn eines neuen Zeitintervalls direkt ausgelöst, ohne dass eine unabhängige, separate Betätigung irgendeiner Vorrichtung notwendig wäre. Somit entfallen Bedienvorgänge wie das Versetzen eines Stellrings zur Markierung eines Rückspüldatums oder das Drücken von Bedientasten von Erinnerungsvorrichtungen. Die Schalteinrichtung wird durch die manuelle Durchführung (manuelle Aktivierung) der Rückspülung ausgelöst, d.h. durch die händische Betätigung mechanisch beweglicher Teile des Filters zur Vornahme einer Rückspülung. Die Auslösung der Schalteinrichtung hat wiederum zur Folge, dass die an die Schalteinrichtung gekoppelte Zeitmessvorrichtung beginnt, ein neues Zeitintervall zu zählen ("hoch"- oder "runter" zu zählen). Ein Zurücksetzen der Zeitmessvorrichtung anlässlich der letzten Rückspülung kann nicht vergessen werden. Der erfindungsgemäße Filter ist dazu geeignet, das erfindungsgemäße Verfahren durchzuführen.

Bei einer bevorzugten Ausführungsform umfasst der Filter einen Siebfiltereinsatz, wobei der Siebfiltereinsatz in einem Gehäuse zwischen einem Einlass und einem Auslass angeordnet ist, und wobei der Siebfiltereinsatz das Gehäuse in eine Einlasskammer und eine Auslasskammer unterteilt, und eine Rückspüleinrichtung mit mindestens einer Absaugvorrichtung, die in der Einlasskammer angeordnet ist und mit einer Antriebseinrichtung zur Durchführung einer Relativbewegung zwischen dem Siebfiltereinsatz und der Absaugvorrichtung. Bei einer derartigen Ausführungsform des erfindungsgemäßen Filters ermöglicht die Absaugvorrichtung die Aussonderung des Schmutzes, der sich in dem vorhergehenden Zeitintervall am Siebfiltereinsatz angesammelt hat. Dabei können durch die Antriebseinrichtung im Zuge der Relativbewegung zwischen Siebfiltereinsatz und Absaugvorrichtung in vorteilhafter Weise mit der Absaugvorrichtung unterschiedliche Orte oder Punkte auf dem Siebfiltereinsatz angefahren werden und dort eine Reinigung vorgenommen werden. Die Absaugvorrichtung kann im Vergleich zur bereit gestellten Siebfilterfläche in ihren konstruktiven Abmessungen klein gehalten werden. Kleine Abmessungen der Absaugvorrichtung erlauben dabei relativ hohe Strömungsgeschwindigkeiten während der Absaugung, wodurch die Rückspülung besonders effektiv erfolgen kann. Die Absaugvorrichtung ist entlang der Oberfläche des Siebfiltereinsatzes bewegbar. An der Absaugvorrichtung ist in der Regel ein Spülventil angeordnet, durch das nach einer Öffnung die angesammelten Verunreinigungen ausgespült werden können. Die Antriebseinrichtung (in der Regel ein Handrad) wird beim Durchführen einer Rückspülung vom Anwender manuell betätigt.

Eine Weiterbildung der vorhergehenden Ausführungsform ist dadurch gekennzeichnet, dass die Antriebseinheit über ein Handrad manuell betätigbar ist. Dann kann der Anwender in vorteilhafter Weise auf weitere Hilfsmittel zur Bedienung des Filters, wie z.B. Werkzeugschlüssel oder dergleichen, verzichten und eine Durchführung (Aktivierung) der Rückspülung bequem von Hand vornehmen.

Bei einer weiteren Weiterbildung der vorhergehenden Ausführungsformen ist die Schalteinrichtung als ein mechanisch auslösbarer Schalter ausgebildet, insbesondere wobei der Schalter als ein Taster, der mit einer Nocke zusammenwirkt, ausgebildet ist. Mechanische Schalter, insbesondere Taster, gehören zu Massenartikeln, die zuverlässig funktionieren und zu günstigen Preisen erhältlich sind. Somit ist ein derartig ausgebildeter Filter vergleichsweise günstig herzustellen. Eine Nocke zum Zusammenwirken mit dem mechanischen Schalter oder dem Taster kann beispielsweise an dem Handrad ausgebildet sein und beim Bewegen des Handrades (während der Rückspülung) den mechanischen Schalter oder den Taster betätigen. Durch diese Betätigung wird dann die an den Taster oder den Schalter gekoppelte Zeitmessvorrichtung geschaltet, d.h. es wird ein neues Zeitintervall gestartet/begonnen. Der Taster oder mechanische Schalter kann alternativ auch an dem Handrad ausgebildet sein und die Nocke entsprechend ortsfest am Filter befestigt sein.

Eine andere Weiterbildung der vorhergehenden Ausführungsformen ist dadurch gekennzeichnet, dass die Schalteinrichtung über das Zusammenwirken einer Hallsonde mit einem Permanentmagneten auslösbar ist. Hallsonden und auch Permanentmagnete können im Handel üblicherweise zu günstigen Preisen gekauft werden und helfen somit, die Produktionskosten für einen erfindungsgemäßen Filter gering zu halten. Sie sind darüber hinaus in ihren räumlichen Ausmaßen vergleichsweise klein und sind daher leicht in einem Filter zu verbauen. Es handelt sich weiterhin um verschleißarme Teile, die in der Regel keine Wartung benötigen.

Eine bevorzugte Ausführungsform sieht vor, dass der Filter ein Signalgeber aufweist, der bei Ablauf des Zeitintervalls und/oder nach Erreichen einer Hinweiszeit und/oder beim Unterschreiten einer Vorwarnzeit ein Signal abgibt. Somit kann der Anwender des Filters über ein fälliges Rückspülen oder ein mittelfristig anstehendes Rückspülen informiert und erinnert werden. Der Signalgeber kann insbesondere ein optischer Signalgeber und/oder akustischer Signalgeber und/oder elektrischer Signalgeber und/oder Funksignalgeber sein. Schließlich sieht eine weitere bevorzugte Ausführungsform vor, dass der Filter eine Anzeige aufweist, die die seit Beginn des Zeitintervalls verstrichene Zeit oder die noch bis zum Ablauf des Zeitintervalls verbleibende Zeit anzeigt. Es ist somit jederzeit ersichtlich, ob und wann Handlungsbedarf in Form einer Rückspülung des Filters besteht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in den Zeichnungen dargestellt und wird anhand von Ausführungsbeispielen näher erläutert. Es zeigt:
- Fig. 1: ein Ablaufdiagramm eines erfindungsgemäßen Verfahrens; und
- Fig. 2: eine perspektivische, schematische Darstellung eines erfindungsgemäßen rückspülbaren Filters zur Durchführung des erfindungsgemäßen Verfahrens.

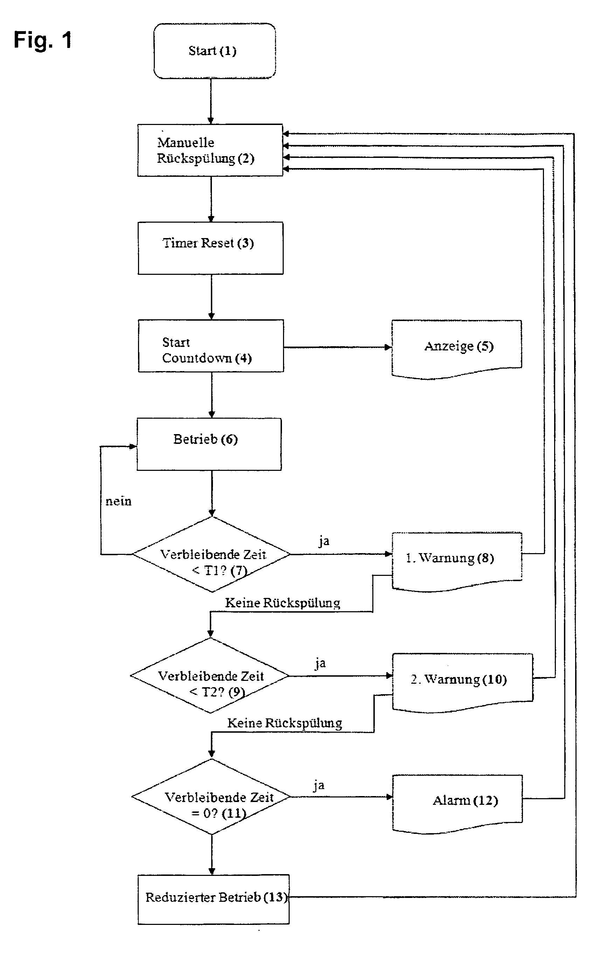

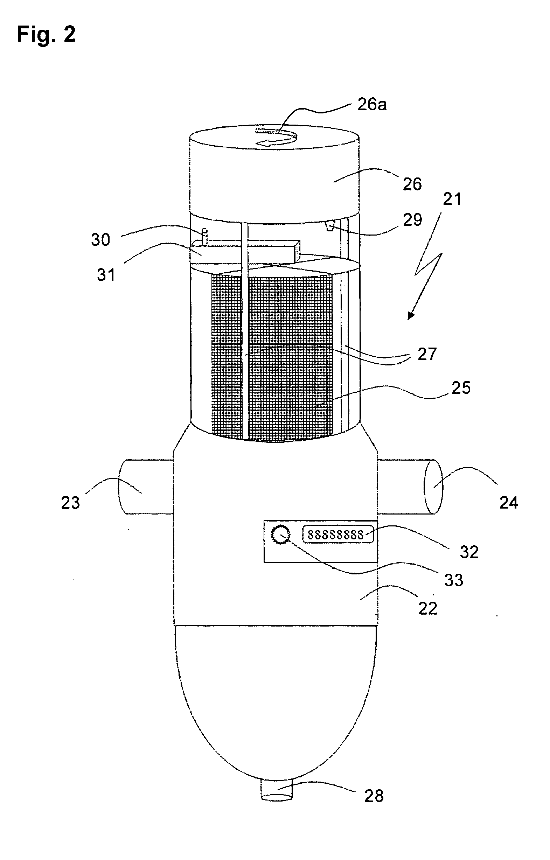

In der Figur 1 ist beispielhaft ein Ablaufdiagramm (Flussdiagramm) eines erfindungsgemäßen Betriebsverfahrens für einen rückspülbaren Filter dargestellt. Bei Inbetriebnahme ("Start" 1) des rückspülbaren Filters wird eine manuelle Rückspülung ("Manuelle Rückspülung" 2) durchgeführt, um den Filter vor der Inbetriebnahme zu entlüften. Hierzu wird z.B. ein Handrad (vgl. Handrad 26 in Fig. 2) am Filter gedreht. Durch die Drehung des Handrades wird eine Zeitmessvorrichtung zurückgesetzt ("Timer Reset" 3), das bedeutet in diesem Falle, dass ein Zeitintervall für eine nachfolgende Zurückzählung vorbereitet wird. Das Schalten der Zurücksetzung der Zeitmessvorrichtung erfolgt beispielsweise mechanisch durch eine mit dem Handrad mitgedrehte Nocke, die über einen Taster fährt, der mit der Zeitmessvorrichtung gekoppelt oder verbunden ist, und somit den Taster betätigt. Nach der Zurücksetzung der Zeitmessvorrichtung beginnt das Rückwärtszählen bis zur nächsten Rückspülung ("Start Countdown" 4). Der aktuelle Zustand, d.h. die bis zur nächsten Rückspülung verbleibende Zeit, wird über eine Anzeige (Display) dargestellt ("Anzeige" 5). Rückspülbare Filter sind nach DIN 1988 spätestens alle zwei Monate rückzuspülen. Bei stärkerer Verschmutzung kann das Intervall entsprechend verkürzt werden. Unterschreitet während des normalen Betriebes des Filters ("Betrieb" 6) die noch bis zur nächsten Rückspülung verbleibende Zeit eine erste einstellbare Vorwarnzeit T1 ("verbleibende Zeit < T1" 7), so wird ein erstes Warnsignal (Vorwarnsignal) ausgesendet bzw. abgegeben ("1. Warnung" 8).

Bei Durchführung einer Rückspülung ("Manuelle Rückspülung" 2) wird der Filter gereinigt, wobei Schmutzpartikel ausgespült werden. Die Zeitmessvorrichtung wird dabei direkt zurückgesetzt ("Timer Reset" 3) und das Rückwärtszählen beginnt erneut (,Start Countdown" 4). Mit Durchführung der Rückspülung wird auch das Warnsignal abgeschaltet.

Wird das erste Warnsignal ignoriert und keine Rückspülung durchgeführt, so läuft der Countdown weiter, bis eine zweite einstellbare Vorwarnzeit T2 unterschritten wird ("verbleibende Zeit < T2" 9). In diesem Fall wird ein zweites, vom ersten unterscheidbares Warnsignal (Vorwarnsignal) gesendet ("2. Warnung" 10).

Bei anschließender Durchführung einer Rückspülung ("Manuelle Rückspülung" 2) wird die Zeitmessvorrichtung wiederum selbsttätig zurückgesetzt ("Timer Reset" 3) und das Rückwärtszählen beginnt erneut ("Start Countdown" 4). Die erste und die zweite Vorwarnzeit T1 und T2 sowie die maximale Zeit zwischen zwei Rückspülungen können werksseitig vorgegeben sein oder sie werden individuell in eine Steuereinrichtung einprogrammiert. Beispielsweise kann für T1 eine Zeit zwischen ein und zwei Wochen, für T2 eine Zeit zwischen ein und drei Tagen gewählt werden.

Wird auch dieses zweite Warnsignal ignoriert, bis die verbleibende Zeit (Restzeit) bis zur nächsten Rückspülung abgelaufen ist ("verbleibende Zeit = 0" 11), so wird ein Alarmsignal abgesendet oder abgegeben ("Alarm" 12), das deutlich von den beiden anderen Warnsignalen unterscheidbar ist. Der Filter kann dann mit reduzierter Leistung ("Reduzierter Betrieb" 13) bis zur Durchführung einer Rückspülung ("Manuelle Rückspülung" 2) weiterbetrieben werden. Erst dann steht der Filter wieder mit voller Leistung zur Verfügung.

Die Figur 2 zeigt anhand eines Ausführungsbeispiels in schematischer Darstellung einen rückspülbaren Filter 21 zur Durchführung des erfindungsgemäßen Verfahrens. Der rückspülbare Filter 21 verfügt über einen in einem Gehäuse 22 zwischen einem Einlass 23 und einem Auslass 24 angeordneten Siebfiltereinsatz 25. Um eine einwandfreie Filterfunktion zu gewährleisten, muss der Siebfiltereinsatz 25 in regelmäßigen Abständen gereinigt, d.h. rückgespült werden. Hierzu wird durch Drehen eines Handrades 26 (in Pfeilrichtung 26a) ein Spülventil geöffnet. Gleichzeitig rotieren durch das manuelle Drehen in Pfeilrichtung 26a mehrere Absaugeinrichtungen 27 um den Siebfiltereinsatz 25. Ein Teil des filtrierten Wasserstromes wird im Filter 21 umgeleitet, durchströmt den Siebfiltereinsatz 25 in umgekehrter Richtung, löst am Siebfiltereinsatz 25 abgelagerte Schmutzpartikel ab und wird schließlich über die Absaugeinrichtungen 27 und einen Spülkanal 28 ausgespült.

Mit der Drehung des Handrades 26 wird automatisch eine Nocke 29 mit dem Handrad 26 mitgedreht. Die Nocke 29 überfährt einen Taster 30 einer Zeitmessvorrichtung 31, und löst damit einen Schaltvorgang aus.

Der Zeitmessvorrichtung 31 wird durch das Überfahren und Drücken des Tasters 30 intern zunächst zurückgesetzt und anschließend neu gestartet. Die seit Durchführung der letzten Rückspülung, d.h. die seit dem letzten Drehen des Handrades 26 vergangene Zeit wird gemessen und mittels einer Anzeige 32 dargestellt. Ebenso kann das Zurückzählen (die verbleibende Zeit) bis zur nächstfälligen Rückspülung an der Anzeige 32 dargestellt werden ("Countdown"). Wird durch das Zurückzählen eine vorgegebene Vorwarnzeit unterschritten, so wird über einen Signalgeber 33 ein erstes Warnsignal (Vorwarnsignal) abgegeben. Bei Unterschreitung weiterer Vorwarnzeiten oder bei Ablauf des maximalen Zeitintervalls zwischen zwei Rückspülungen werden vom ersten Warnsignal unterscheidbare Signale abgegeben. Diese können neben optischen auch akustische und/oder elektrische Signale und/oder Funksignale sein. Die Vorwarnzeiten zur Auslösung von Warnsignalen können werksseitig vorgegeben sein oder individuell gewählt und beispielsweise über ein (nicht dargestelltes) Potentiometer eingestellt werden.

Zusammenfassend werden vorgeschlagen ein Verfahren zum Betrieb eines rückspülbaren Filters, sowie ein rückspülbarer Filter 21 zur Durchführung des erfindungsgemäßen Verfahrens. Bei dem erfindungsgemäßen Betriebsverfahren wird durch eine manuelle Durchführung einer Rückspülung 2 gleichzeitig und in direkter Weise die Messung eines Zeitintervalls 4 bis zu einer nächsten Rückspülung 2 gestartet. Nach Ablauf und/oder kurz vor Ablauf des Zeitintervalls wird durch ein Signal 8,10,12 an die bevorstehende Rückspülung 2 erinnert. Der Anwender des erfindungsgemäßen Betriebsverfahrens oder der Anwender eines rückspülbaren Filters 21, der für die Durchführung des erfindungsgemäßen Verfahrens geeignet ist, wird somit sicher und zuverlässig an individuell einstellbare oder normgemäß vorgeschriebene (DIN 1988) Rückspülzyklen erinnert und somit deutlich entlastet.

## Patentansprüche

1. Verfahren zum Betrieb eines rückspülbaren Filters (21), insbesondere eines Filters (21) für eine Hauswasseranlage, wobei eine Rückspülung (2) des Filters (21) jeweils manuell durchgeführt wird, wobei zur manuellen Durchführung der Rückspülung ein Hebel, ein Handrad (26) oder eine andere Bedienungsmechanik durch den Anwender von Hand bewegt wird, wobei durch diese Bewegung der Filter (21) händisch mechanisch verstellt wird, wobei durch diese Verstellung ein oder mehrere Ventile zum Einstellen der für die Rückspülung erforderlichen Flüssigkeitsströme geöffnet oder geschlossen werden, und wobei mittels einer Zeitmessvorrichtung (31) der Ablauf (11) eines definierten Zeitintervalls bestimmt wird und bei Ablauf (11) des Zeitintervalls an die Durchführung der nächsten Rückspülung erinnert (12) wird,
**dadurch gekennzeichnet,**
**dass** mittels der manuellen Durchführung einer Rückspülung (2) der Beginn eines neuen Zeitintervalls in der Zeitmessvorrichtung (31) geschaltet (3,4) wird.

2. Verfahren nach Anspruch 1, **dadurch gekennzeichnet, dass** die Rückspülung (2) die Durchführung einer Relativbewegung zwischen einem Siebfiltereinsatz (25) und einer Absaugvorrichtung (27) umfasst.

3. Verfahren nach Anspruch 2, **dadurch gekennzeichnet, dass** durch die Relativbewegung ein mechanischer Schalter, insbesondere ein Taster (30), betätigt wird.

4. Verfahren nach Anspruch 2, **dadurch gekennzeichnet, dass** durch die Relativbewegung ein Hallimpuls erzeugt wird, der den Beginn eines neuen Zeitintervalls schaltet (3,4).

5. Verfahren nach einem der Ansprüche 2 bis 4, **dadurch gekennzeichnet, dass** die Relativbewegung durch die manuelle Drehung eines Handrades (26) erfolgt.

6. Verfahren nach einem der vorhergehenden Ansprüche, **dadurch gekennzeichnet, dass** die Zeitmessvorrichtung (31) den Ablauf (11) des Zeitintervalls bestimmt, indem die Zeitmessvorrichtung (31) die noch bis zum Ablauf (11) eines Zeitintervalls verbleibende Zeit zurückzählt.

7. Verfahren nach einem der vorhergehenden Ansprüche, **dadurch gekennzeichnet, dass** die Zeitmessvorrichtung (31) den Ablauf (11) des Zeitintervalls bestimmt, indem die Zeitmessvorrichtung (31) die vom Beginn eines Zeitintervalls an verstrichene Zeit hochzählt.

8. Verfahren nach einem der vorhergehenden Ansprüche, **dadurch gekennzeichnet, dass** bei Ablauf (11) eines Zeitintervalls ein Signal (12) abgegeben wird.

9. Verfahren nach einem der vorhergehenden Ansprüche, **dadurch gekennzeichnet, dass** ein zusätzliches Signal (8,10) abgegeben wird, wenn die noch bis zum Ablauf (11) eines Zeitintervalls verbleibende Zeit (7,9) eine einstellbare Vorwarnzeit (T1,T2) unterschreitet.

10. Verfahren nach einem der vorhergehenden Ansprüche, **dadurch gekennzeichnet, dass** ein zusätzliches Signal abgegeben wird, wenn die vom Beginn eines Zeitintervalls an verstrichene Zeit eine einstellbare Hinweiszeit erreicht hat.

11. Verfahren nach einem der Ansprüche 8 bis 10, **dadurch gekennzeichnet, dass** das oder die abgegebenen Signale (8,10,12) optische und/oder akustische und/oder elektrische Signale und/oder Funksignale sind.

12. Verfahren nach einem der vorhergehenden Ansprüche, **dadurch gekennzeichnet, dass** der Filter (21) über die seit Beginn eines Zeitintervalls verstrichene Zeit oder die noch bis zum Ablauf eines Zeitintervalls verbleibende Zeit (7,9) mittels einer Anzeige (32) informiert.

13. Rückspülbarer Filter (21), insbesondere rückspülbarer Filter (21) für eine Hauswasseranlage, zur Filterung eines flüssigen Mediums, wobei der Filter (21) zur manuellen Durchführung einer den Filter (21) reinigenden Rückspülung (2) ausgebildet ist, umfassend
- einen Hebel, ein Handrad (26) oder eine andere Bedienungsmechanik zur Bewegung durch einen Anwender von Hand,
- ein oder mehrere Ventile zum Einstellen der für die Rückspülung erforderlichen Flüssigkeitsströme, wobei durch eine Bewegung des Hebels, des Handrads (26) oder der anderen Bedienungsmechanik der Filter (21) händisch mechanisch verstellbar ist, wobei durch diese Verstellung das oder die Ventile geöffnet oder geschlossen werden,
- und eine Zeitmessvorrichtung (31) zur Bestimmung des Ablaufs (11) eines Zeitintervalls und zur Erinnerung (8,10,12) an die Durchführung einer Rückspülung (2) bei Ablauf (11) des Zeitintervalls,
**dadurch gekennzeichnet,**
**dass** der Filter (21) eine Schalteinrichtung aufweist, die durch die manuelle Durchführung einer Rückspülung (2) auslösbar ist, und dass die Schalteinrichtung an die Zeitmessvorrichtung (31) gekoppelt ist, um den Beginn eines Zeitintervalls zu schalten (3,4).

14. Rückspülbarer Filter (21) nach Anspruch 13, **dadurch gekennzeichnet, dass** der Filter (21) umfasst:
- einen Siebfiltereinsatz (25), wobei der Siebfiltereinsatz (25) in einem Gehäuse (22) zwischen einem Einlass (23) und einem Auslass (24) angeordnet ist, und wobei der Siebfiltereinsatz (25) das Gehäuse (22) in eine Einlasskammer und eine Auslasskammer unterteilt, und
- eine Rückspüleinrichtung mit:
o mindestens einer Absaugvorrichtung (27), die in der Einlasskammer angeordnet ist,
o und mit einer Antriebseinrichtung zur Durchführung einer Relativbewegung zwischen dem Siebfiltereinsatz (25) und der Absaugvorrichtung (27).

15. Rückspülbarer Filter (21) nach Anspruch 14, **dadurch gekennzeichnet, dass** die Antriebseinrichtung über ein Handrad (26) manuell betätigbar ist.

16. Rückspülbarer Filter (21) nach einem der Ansprüche 13 bis 15, **dadurch gekennzeichnet, dass** die Schalteinrichtung als ein mechanisch auslösbarer Schalter ausgebildet ist, insbesondere wobei der Schalter als ein Taster (30), der mit einer Nocke (29) zusammenwirkt, ausgebildet ist.

17. Rückspülbarer Filter (21) nach einem der Ansprüche 13 bis 15, **dadurch gekennzeichnet, dass** die Schalteinrichtung über das Zusammenwirken einer Hallsonde mit einem Permanentmagneten auslösbar ist.

18. Rückspülbarer Filter (21) nach einem der vorhergehenden Ansprüche, **dadurch gekennzeichnet, dass** der Filter (21) ein Signalgeber (33) aufweist, der bei Ablauf (11) des Zeitintervalls und/oder nach Erreichen einer Hinweiszeit und/oder beim Unterschreiten einer Vorwarnzeit (T1,T2) ein Signal (8,10,12) abgibt.

19. Rückspülbarer Filter (21) nach einem der vorhergehenden Ansprüche, **dadurch gekennzeichnet, dass** der Filter (21) eine Anzeige (32) aufweist, die die seit Beginn des Zeitintervalls verstrichene Zeit oder die noch bis zum Ablauf des Zeitintervalls verbleibende Zeit (7,9) anzeigt.

## Claims

1. Method for operating a back-washable filter (21), in particular a filter (21) for a house water system, wherein each back-washing operation (2) of the filter (21) is performed manually, wherein for manual performance of a back-washing operation, the user moves a lever, a handwheel (26) or a different operating mechanism by hand, wherein this movement causes manual mechanical adjustment of the filter (21), wherein one or several valves is/are opened or closed by this adjusting motion for setting the liquid flows required for back-washing, and wherein expiration (11) of a defined time interval is determined using a time-measuring device (31), and upon expiration (11) of the time interval, the user is reminded of performing the next back-washing operation (12),
**characterized in that**
through the manual performance of a back-washing operation (2), the time-measuring device (31) is switched to the start of a new time interval.

2. Method according to claim 1, **characterized in that** the back-washing operation (2) includes performance of a relative motion between a screen filter insert (25) and a suction device (27).

3. Method according to claim 2, **characterized in that** the relative motion causes actuation of a mechanical switch, in particular a push-button (30).

4. Method according to claim 2, **characterized in that** the relative motion causes generation of a Hall pulse which switches (3, 4) to the start of a new time interval.

5. Method according to any one of the claims 2 through 4, **characterized in that** the relative motion is performed by manually rotating a handwheel (26).

6. Method according to any one of the preceding claims, **characterized in that** the time-measuring device (31) determines the expiration (11) of the time interval **in that** the time-measuring device (31) counts back the time that remains until expiration (11) of a time interval.

7. Method according to any one of the preceding claims, **characterized in that** the time-measuring device (31) determines the expiration (11) of the time interval **in that** the time-measuring device (31) counts up the time that has lapsed since the start of a time interval.

8. Method according to any one of the preceding claims, **characterized in that** a signal (12) is issued upon expiration (11) of a time interval.

9. Method according to any one of the preceding claims, **characterized in that** an additional signal (8, 10) is issued when the time (7, 9) that remains until expiration (11) of a time interval falls below an adjustable advance warning time (T1, T2).

10. Method according to any one of the preceding claims, **characterized in that** an additional signal is issued when the time that has lapsed since the start of a time interval has reached an adjustable notification time.

11. Method according to any one of the claims 8 through 10, **characterized in that** the issued signal(s) (8, 10, 12) is/are optical and/or acoustic and/or electrical signals and/or radio signals.

12. Method according to any one of the preceding claims, **characterized in that** the filter (21) provides information about the time that has lapsed since the start of a time interval or about the time (7, 9) that remains until expiration of a time interval by means of a display (32).

13. Back-washable filter (21), in particular back-washable filter (21) for a house water system, for filtering a liquid medium, wherein the filter (21) is designed for manual performance of a back-washing operation (2) that cleans the filter (21), comprising
- a lever, a handwheel (26) or a different operating mechanism which the user moves by hand,
- one or several valves for setting the liquid flows that are required for back-washing, wherein the filter (21) can be manually mechanically adjusted by moving the lever, the handwheel (26) or the different operating mechanism, wherein the valve(s) is/are opened or closed by this adjusting motion,
- and a time-measuring device (31) for determining the expiration (11) of a time interval and for reminding (8, 10, 12) of the performance of a back-washing operation (2) upon expiration (11) of the time interval,
**characterized in that**
the filter (21) comprises a switching device that can be triggered by the manual performance of a back-washing operation (2), and the switching device is coupled to the time-measuring device (31) for switching (3, 4) to the start of a time interval.

14. Back-washable filter (21) according to claim 13, **characterized in that** the filter (21) comprises:
- a screen filter insert (25), wherein the screen filter insert (25) is disposed in a housing (22) between an inlet (23) and an outlet (24), and wherein the screen filter insert (25) divides the housing (22) into an inlet chamber and an outlet chamber, and
- a back-washing device comprising:
° at least one suction device (27) disposed in the inlet chamber
° and a drive unit for performing a relative motion between the screen filter insert (25) and the suction device (27).

15. Back-washable filter (21) according to claim 14, **characterized in that** the drive unit can be manually operated via a handwheel (26).

16. Back-washable filter (21) according to any one of the claims 13 through 15, **characterized in that** the switching device is designed as a switch that can be mechanically triggered, in particular, wherein the switch is designed as a push-button (30) that cooperates with a cam (29).

17. Back-washable filter (21) according to any one of the claims 13 through 15, **characterized in that** the switching device can be triggered by the interaction between a Hall probe and a permanent magnet.

18. Back-washable filter (21) according to any one of the preceding claims, **characterized in that** the filter (21) has a signal generator (33) which issues a signal (8, 10, 12) upon expiration (11) of the time interval and/or after reaching a notification time and/or upon falling below an advance warning time (T1, T2).

19. Back-washable filter (21) according to any one of the preceding claims, **characterized in that** the filter (21) has a display (32) which displays the time that has lapsed since the time interval has started or displays the time (7, 9) that remains until expiration of the time interval.

## Revendications

1. Procédé d'exploitation d'un filtre (21) lavable à contre-courant, en particulier d'un filtre (21) pour une installation d'alimentation en eau domestique, sachant qu'un lavage à contre-courant (2) du filtre (21) est chaque fois effectué manuellement, sachant que pour l'exécution manuelle du lavage à contre-courant, un levier, un volant (26) ou un autre mécanisme d'actionnement est déplacé à la main par l'utilisateur, sachant que par ce déplacement, le filtre (21) est mû mécaniquement de façon manuelle, sachant que par ce mouvement, une ou plusieurs soupapes destinées à régler les flux de liquide nécessaires pour le lavage à contre-courant sont ouvertes ou fermées, et sachant qu'au moyen d'un dispositif de mesure de temps (31), on détermine l'écoulement (11) d'un intervalle de temps défini et, à l'expiration (11) de l'intervalle de temps, on rappelle (12) qu'il faut effectuer le prochain lavage à contre-courant, **caractérisé en ce que** l'exécution manuelle d'un lavage à contre-courant (2) déclenche (3, 4) le début d'un nouvel intervalle de temps dans le dispositif de mesure de temps (31).

2. Procédé selon la revendication 1, **caractérisé en ce que** le lavage à contre-courant (2) comprend l'exécution d'un mouvement relatif entre une cartouche de filtre-tamis (25) et un dispositif d'aspiration (27).

3. Procédé selon la revendication 2, **caractérisé en ce que** le mouvement relatif actionne un commutateur mécanique, en particulier un bouton (30).

4. Procédé selon la revendication 2, **caractérisé en ce que** le mouvement relatif produit une impulsion à effet Hall qui déclenche (3, 4) le début d'un nouvel intervalle de temps.

5. Procédé selon l'une des revendications 2 à 4, **caractérisé en ce que** le mouvement relatif s'effectue par la rotation manuelle d'un volant (26).

6. Procédé selon l'une des revendications précédentes, **caractérisé en ce que** le dispositif de mesure de temps (31) détermine l'écoulement (11) de l'intervalle de temps par le fait que le dispositif de mesure de temps (31) compte à rebours le temps restant jusqu'à l'expiration (11) d'un intervalle de temps.

7. Procédé selon l'une des revendications précédentes, **caractérisé en ce que** le dispositif de mesure de temps (31) détermine l'écoulement (11) de l'intervalle de temps par le fait que le dispositif de mesure de temps (31) compte le temps qui s'est écoulé depuis le début d'un intervalle de temps.

8. Procédé selon l'une des revendications précédentes, **caractérisé en ce qu'**un signal (12) est délivré à l'expiration (11) d'un intervalle de temps.

9. Procédé selon l'une des revendications précédentes, **caractérisé en ce qu'**un signal supplémentaire (8, 10) est délivré lorsque le temps restant (7, 9) jusqu'à l'expiration (11) d'un intervalle de temps devient inférieur à une durée d'avertissement réglable (T1, T2).

10. Procédé selon l'une des revendications précédentes, **caractérisé en ce qu'**un signal supplémentaire est délivré lorsque le temps qui s'est écoulé depuis le début d'un intervalle de temps a atteint une durée de référence réglable.

11. Procédé selon l'une des revendications 8 à 10, **caractérisé en ce que** le ou les signaux délivrés (8, 10, 12) sont des signaux optiques et/ou acoustiques et/ou électriques, et/ou des signaux radio.

12. Procédé selon l'une des revendications précédentes, **caractérisé en ce que** le filtre (21) indique au moyen d'un affichage (32) le temps qui s'est écoulé depuis le début d'un intervalle de temps ou le temps restant (7, 9) jusqu'à l'expiration d'un intervalle de temps.

13. Filtre (21) lavable à contre-courant, en particulier filtre (21) lavable à contre-courant pour une installation d'alimentation en eau domestique, pour filtrer un milieu liquide, sachant que le filtre (21) est conçu pour l'exécution manuelle d'un lavage à contre-courant (2) nettoyant le filtre (21), comprenant
- un levier, un volant (26) ou un autre mécanisme d'actionnement à déplacer à la main par un utilisateur,
- une ou plusieurs soupapes destinées à régler les flux de liquide nécessaires pour le lavage à contre-courant, sachant que par un déplacement du levier, du volant (26) ou de l'autre mécanisme d'actionnement, le filtre (21) peut être mû mécaniquement de façon manuelle, sachant que par ce mouvement, la ou les soupapes sont ouvertes ou fermées,
- et un dispositif de mesure de temps (31) pour déterminer l'écoulement (11) d'un intervalle de temps et pour, à l'expiration (11) de l'intervalle de temps, rappeler (8, 10, 12) qu'il faut effectuer un lavage à contre-courant (2),
**caractérisé en ce que** le filtre (21) présente un organe de commutation qui peut être déclenché par l'exécution manuelle d'un lavage à contre-courant (2), et **en ce que** l'organe de commutation est couplé au dispositif de mesure de temps (31) afin de déclencher (3, 4) le début d'un intervalle de temps.

14. Filtre (21) lavable à contre-courant selon la revendication 13, **caractérisé en ce que** le filtre (21) comprend :
- une cartouche de filtre-tamis (25), sachant que la cartouche de filtre-tamis (25) est disposé dans un boîtier (22) entre une admission (23) et une évacuation (24), et sachant que la cartouche de filtre-tamis (25) divise le boîtier (22) est une chambre d'admission et une chambre d'évacuation, et
- un système de lavage à contre-courant avec :
- au moins un dispositif d'aspiration (27), qui est disposé dans la chambre d'admission,
- et un organe d'entraînement pour effectuer un mouvement relatif entre la cartouche de filtre-tamis (25) et le dispositif d'aspiration (27).

15. Filtre (21) lavable à contre-courant selon la revendication 14, **caractérisé en ce que** l'organe d'entraînement peut être actionné manuellement au moyen d'un volant (26).

16. Filtre (21) lavable à contre-courant selon l'une des revendications 13 à 15, **caractérisé en ce que** l'organe de commutation est réalisé sous la forme d'un commutateur à déclenchement mécanique, sachant notamment que le commutateur est réalisé sous la forme d'un bouton (30) qui coopère avec une came (29).

17. Filtre (21) lavable à contre-courant selon l'une des revendications 13 à 15, **caractérisé en ce que** l'organe de commutation peut être déclenché au moyen de la coopération d'une sonde de Hall avec un aimant permanent.

18. Filtre (21) lavable à contre-courant selon l'une des revendications précédentes, **caractérisé en ce que** le filtre (21) présente un émetteur de signaux (33) qui délivre un signal (8, 10, 12) à l'expiration (11) de l'intervalle de temps et/ou à la suite de l'atteinte d'une durée de référence et/ou lors du passage sous une durée d'avertissement (T1, T2).

19. Filtre (21) lavable à contre-courant selon l'une des revendications précédentes, **caractérisé en ce que** le filtre (21) présente un affichage (32) qui affiche le temps qui s'est écoulé depuis le début de l'intervalle de temps ou le temps restant (7, 9) jusqu'à l'expiration de l'intervalle de temps.
